# EUROPÄISCHE PATENTANMELDUNG

(11) **EP 1 600 289 A1**
(43) Veröffentlichungstag der Anmeldung: **30.11.2005**
(21) Anmeldenummer: 05011012.1
(22) Anmeldetag: 20.05.2005
(51) Int. Cl.: B32B 27/32

(54) **Sterilisationsbeständige bzw. pasteurisierungsbeständige Verpackungsfolie**

(30) Priorität: 28.05.2004 DE 102004026681
(71) Anmelder: Wipak Walsrode GmbH & Co. KG, 29656 Walsrode (DE)
(72) Erfinder: Nelke, Dorit, Dr., 21698 Bargstedt (DE); Müller, Claudia, Dr., 15140 Lahti (FI); Jacobsen, Sven, Dr., 29683 Bad Fallingbostel (DE)
(74) Vertreter: Kutzenberger, Helga

(57) **Zusammenfassung**

Pasteurisierungsbeständige bzw. sterilisationsbeständige Mehrschichtfolie umfassend wenigstens eine Polyamidschicht als Außenschicht, wenigstens eine innenliegende Sauerstoffbarriereschicht, wenigstens eine innenliegende Schicht mit der Fähigkeit zur Sauerstoffabsorption und eine Siegelschicht, sowie eine diese Mehrschichtfolie enthaltene Verpackung und deren Verwendung, wobei die Mehrschichtfolie eine Sauerstoffdurchlässigkeit aufweist, die durch Pasteurisieren bzw. Sterilisieren der Mehrschichtfolie höchstens auf die Sauerstoffdurchlässigkeit einer entsprechend aufgebauten, nicht pasteurisierten bzw. nicht sterilisierten Mehrschichtfolie ohne eine Schicht mit sauerstoffabsorbierenden Komponenten ansteigt.

## Beschreibung

Die vorliegende Erfindung betrifft eine pasteurisierungsbeständige bzw. sterilisationsbeständige Mehrschichtfolie umfassend wenigstens eine Polyamidschicht als Außenschicht, wenigstens eine innenliegende Sauerstoffbarriereschicht, wenigstens eine innenliegende Schicht mit der Fähigkeit zur Sauerstoffabsorption und eine Siegelschicht, deren Verwendung als Verpackungsmaterial und daraus hergestellte Verpackungen.

Eine wesentliche Anforderung an die Lagerung und/oder den Transport vieler Güter, insbesondere von verderblichen Gütern, ist deren Schutz vor der Umgebungsluft bzw. der umgebenden Atmosphäre. Aus diesem Grund müssen diese so verpackt werden, dass in ihre Verpackung mit Schutzgas-Atmosphäre oder Vakuum möglichst wenige Bestandteile der Umgebungsatmosphäre eindringen. Insbesondere das Eindringen von Sauerstoff soll vermieden werden, da dessen Anwesenheit bei vielen Gütern, insbesondere Lebensmitteln, zu einem oxidativen Verderb führen kann. Bei einer Verpackung von Arzneimitteln sollte u. a. Sauerstoff ausgeschlossen werden, um das Wachstum von Mikroorganismen zu unterbinden.

Eine Möglichkeit, Sauerstoff vom Verpackungsinhalt fernzuhalten, ist die Verwendung von Verpackungsmaterial, das wenigstens eine praktisch sauerstoffundurchlässige Schicht besitzt. Insbesondere Schichten aus Ethylen-Vinylalkohol Copolymer (EVOH) werden als Sauerstoffbarriereschicht genutzt. Die entsprechenden Folien werden auch als Sauerstoff-Sperrschichtfolien bezeichnet.

Ein Problem bei dem Einsatz solcher Sauerstoff-Sperrschichtfolien zur Herstellung von Verpackungen ist, dass durch eine ggf. notwendige Sterilisation oder Pasteurisierung der Verpackung die Sauerstoffdurchlässigkeit drastisch ansteigt und die Haltbarkeit der verpackten Güter beeinträchtigt wird. So kann beispielsweise die Sauerstoffdurchlässigkeit einer Sauerstoff-Sperrschichtfolie dadurch um bis zu 100 % ansteigen.

Aufgabe der vorliegenden Erfindung war es daher, eine möglichst gasdichte Mehrschichtfolie zur Verfügung zu stellen, deren Sauerstoffdurchlässigkeit durch eine Sterilisation bzw. Pasteurisierung maximal auf den Wert einer entsprechenden nicht erfindungsgemäß modifizierten sowie nicht sterilisierten bzw. nicht pasteurisierten Mehrschichtfolie ansteigt.

Beim Pasteurisieren handelt es sich in diesem Zusammenhang um ein Verfahren zur Haltbarmachung von meist flüssigen Lebensmitteln. Dabei werden diese für einen bestimmten Zeitraum, bevorzugt kurzfristig bis auf eine Kerntemperatur von ≤ 100°C erhitzt. Die Kerntemperatur ist je nach Verfahren und Lebensmittel unterschiedlich hoch, jedoch nie über 100°C. Die Sterilisation ist ein Verfahren, um Lebensmittel dauerhaft haltbar zu machen. Dazu werden die Lebensmittel 15 bis 20 Minuten auf 110 bis 135°C erhitzt. Bei der Heißdampf-Sterilisation in einem Autoklaven wird dazu Wasserdampf verwendet (DIN 58946).

Die Messung der Sauerstoffdurchlässigkeit erfolgt bei der nachstehend angegebenen Temperatur und Raumfeuchte nach DIN 53380-3.

Die vorstehend aufgeführte Aufgabe wird durch das zur Verfügung stellen der erfindungsgemäßen sterilisationsbeständigen bzw. pasteurisierungsbeständigen Mehrschichtfolie gelöst, die wenigstens eine Polyamidschicht als Außenschicht (a), wenigstens eine innenliegende Sauerstoffbarriereschicht (b), wenigstens eine innenliegende Schicht mit der Fähigkeit zur Sauerstoffabsorption (c) und eine Siegelschicht (d) umfaßt, wobei die Mehrschichtfolie eine Sauerstoffdurchlässigkeit aufweist, die durch eine Pasteurisierung bzw. Sterilisation höchstens auf die Sauerstoffdurchlässigkeit einer entsprechend aufgebauten, nicht pasteurisierten bzw. nicht sterilisierten Mehrschichtfolie, die keine Schicht mit einer sauerstoffabsorbierenden Komponente aufweist, ansteigt.

Die erfindungsgemäße Mehrschichtfolie bzw. die daraus hergestellte Verpackung zeichnet sich daher insbesondere dadurch aus, dass sie eine Sauerstoffdurchlässigkeit von gleich oder kleiner 5 cm³/m²•Tag•atm, besonders bevorzugt gleich oder kleiner 3 cm³/m²•Tag•atm (gemessen gemäß der in der vorliegenden Anmeldung offenbarten Methode) aufweist, die sich nach einer Sterilisation oder Pasteurisierung (durchgeführt gemäß der Angaben in der vorliegenden Anmeldung) der Mehrschichtfolie bzw. der daraus hergestellten Verpackung vorzugsweise maximal verdreifacht, vorzugsweise bis höchstens einen Wert von 10 cm³/m²•Tag•atm, besonders bevorzugt bis höchstens einem Wert von gleich oder kleiner 5 cm³/m²•Tag•atm, ganz besonders bevorzugt bis höchstens ein Wert von
≤ 4 cm³/m²•Tag•atm, ansteigt.

Es ist aus dem Stand der Technik bekannt, dass der Einbau von Schichten mit der Fähigkeit zur Sauerstoffabsorption in eine Mehrschichtfolie zur Verringerung der Sauerstoffdurchlässigkeit führt. In EP-A-0688666 ist ein Verpackungsmaterial offenbart, das aus einer praktisch sauerstoffundurchlässigen ersten Schicht basierend auf einem Polyester, Polyolefin, Polyamid oder Ethylen-Vinylalkohol Copolymer, einer zweiten Schicht mit der Fähigkeit zur Sauerstoffabsorption und einer dritten Schicht, die für Sauerstoff durchlässig ist, besteht, wobei die erste Schicht die Außenschicht darstellt. Dieses Dokument enthält keinen Hinweis, dass das Verpackungsmaterial zur Pasteurisierung oder Sterilisation ohne Verlust der Sauerstoffbarriereeigenschaft geeignet ist, da vor allem auch eine Schicht, die für Sauerstoff durchlässig ist, zwingend vorgeschrieben wird und erfindungsgemäß keine außenliegende Schicht mit einer Sauerstoffdurchlässigkeit von größer oder gleich wenigstens 100 cm³/m²•Tag•atm bei 23 °C und 75 % relative Luftfeuchtigkeit notwendig ist.

Die erfindungsgemäße Mehrschichtfolie besitzt wenigstens eine Polyamidschicht als Außenschicht (a), die auf wenigstens einem Polyamid oder Copolyamid ausgewählt aus der Gruppe umfassend aliphatische Polyamide wie PA 6, PA 4, PA 11, PA 12, PA 66, PA 6.66, PA 6.8, PA 6.9, PA 6.10, PA 6.11, PA 6.12, deren Copolymere, aromatische oder teilaromatische Polyamide basiert.

In einer bevorzugten Ausführung enthält die erfindungsgemäße Mehrschichtfolie auch wenigstens eine innenliegende Polyamidschicht, die ebenfalls auf einem Polyamid oder Copolyamid ausgewählt aus der Gruppe umfassend aliphatische Polyamide wie PA 6, PA 4, PA 11, PA 12, PA 66, PA 6.66, PA 6.8, PA 6.9, PA 6.10, PA 6.11, PA 6.12, deren Copolymere, aromatische oder teilaromatische Polyamide basiert, wobei mit dem Begriff innenliegend die Anordnung der Schichten der Mehrschichtfolie gemeint ist, wenn diese als Verpackungsmaterial verwendet wird.

Vorzugsweise wird PA 6 für alle vorhandenen Polyamidschichten eingesetzt.

In einer bevorzugten Ausführung enthält die innenliegende Polyamidschicht nanoskalige, anorganische Füllstoffe, vorzugsweise Schichtsilikate. Dadurch kann die Barrierewirkung der erfindungsgemäßen Mehrschichtfolie gegenüber Sauerstoff erhöht werden, da eine solche Schicht auch als Sauerstoffbarriereschicht funktionieren kann.

Durch den Einbau dieser Schicht kann auch die mechanische Festigkeit und Wärmeformstabilität der erfindungsgemäßen Mehrschichtfolie bzw. der daraus hergestellten Verpackungen verbessert werden. Zusätzlich kann durch die zusätzliche Sauerstoffbarrierewirkung die bereits hohe Lagerstabilität einer aus der erfindungsgemäßen Mehrschichtfolie herstellte Verpackung noch weiter erhöht werden.

Vorzugsweise sind die nanoskaligen, anorganischen Füllstoffe Phyllosilikate, Oxide, Oxihydrate und/oder Carbonate, besonders bevorzugt Montmorillonite und/oder Glimmer.

Bevorzugt beträgt der Anteil der nanoskaligen, anorganischen Füllstoffe in der Polyamidschicht 10 - 3000 ppm, besonders bevorzugt 50 - 2000 ppm, bezogen auf das Polyamid.

Vorzugsweise basiert die Sauerstoffbarriereschicht (b) auf einem Ethylen-Vinylalkohol Copolymeren, das durch Hydrolyse eines Ethylen-Vinylacetat Copolymeren hergestellt wurde. Ganz besonders bevorzugt werden Ethylen-Vinylalkohol Copolymere, die mindestens 29 mol-% Ethyleneinheiten enthalten, eingesetzt.

Bevorzugt weist die Sauerstoffbarriereschicht (b) eine Dicke von etwas 3 - 10 µm auf.

Schichten aus Ethylen-Vinylalkohol Copolymeren besitzen eine sehr geringe Durchlässigkeit für Sauerstoff, die aber wie bekannt ist, durch die Anwesenheit von Feuchtigkeit beeinträchtigt. Um so überraschender ist daher, dass es erfindungsgemäß gelingt, eine Mehrschichtfolie bereit zu stellen, die eine Sauerstoffundurchlässigkeit aufweist, die durch die Pasteurisierung bzw. die Sterilisation der Mehrschichtfolie höchstens auf die Sauerstoffundurchlässigkeit einer entsprechenden aufgebauten, nicht pasteurisierten bzw. nicht sterilisierten Mehrschichtfolie ohne Ausrüstung mit einer sauerstoffabsorbierenden Schicht ansteigt.

Vorzugsweise basiert die sauerstoffabsorbierende Schicht (c) auf einem Polyolefin mit speziellen Additiven.

In einer bevorzugten Ausführung ist das Polyolefin ein Polyethylen ausgewählt aus der Gruppe umfassend Polyethylen hoher Dichte (HDPE), Polyethylen niedriger Dichte (LDPE), lineares Polyethylen niedriger Dichte (LLDPE) oder Ethylencopolymerisat wie ein Ethylen-Propylen-Copolymeres, ein Ethylen-Buten-1-Copolymeres, Ethylen-Hexen-Copolymeres, Ethylen-Methylpenten-Copolymeres, Ethylen-Hepten-Copolymeres, Ethylen-Octen-Copolymeres, Ethylen-Alkylacrylat-Copolymeres, Ethylen-Alkylmethylacrylat-Copolymeres und Ethylen-Vinylacetat-Copolymeres.

Ganz besonders bevorzugt wird die Schicht (c) aus LDPE oder LLDPE hergestellt.

Bevorzugt enthält diese Schicht (c) mit der Fähigkeit zur Sauerstoffabsorption 1 bis 25 Gew-%, besonders bevorzugt 1 bis 15 Gew-%, ganz besonders bevorzugt 1 bis 5 Gew-%, bezogen auf das Gesamtgewicht der Schicht, wenigstens einer sauerstoffabsorbierenden Komponente.

Vorzugsweise wird die sauerstoffabsorbierende Komponente als Masterbatch in dem Polymeren, auf dem die Schicht (c) basiert, eingesetzt.

Die sauerstoffabsorbierenden Komponente ist bevorzugt ein Metallpulver und/oder wenigstens eine Metallverbindung, die reduzierende Eigenschaften aufweist.

Bei dem Metallpulver gibt es keine besonderen Einschränkungen bezüglich der Reinheit, sofern es vorzugsweise als Pulver vorliegt und in der Lage ist, eine Reaktion zur Sauerstoffabsorption einzugehen und in der sauerstoffabsorbierenden Schicht verteilt werden kann. Es ist auch möglich, Metallpulver einzusetzen, das z. T. schon oxidiert ist oder bei dem es sich um eine Legierung aus mehreren Metallsorten handelt.

Vorzugsweise ist das Metallpulver metallisches Eisen, besonders bevorzugt reduziertes Eisen in Pulverform, elektrolytisch hergestelltes Eisenpulver, durch Zerstäuben hergestelltes Eisenpulver, gemahlenes und zerkleinertes Gußeisen, Pulver aus Stahlprodukten oder entsprechenden Abfallmaterialien.

Bevorzugt wird als Metallverbindung eine Eisenverbindung, die reduzierende Eigenschaften aufweist, wie z. B. Eisenoxid oder Eisenhalogenid eingesetzt.

Das Metallpulver und/oder die Metallverbindung, die reduzierende Eigenschaften besitzt, werden vorzugsweise als Pulver zu einem Masterbatch in dem Polymeren der Schicht (c) verarbeitet, das dann mit dem Polymeren der Schicht (c) abgemischt zur Schicht (c) verarbeitet wird.

Die sauerstoffabsorbierenden Komponente weist vorzugsweise eine mittlere Teilchengröße von 3 - 50 µm, besonders bevorzugt 3 - 10 µm und ganz besonders bevorzugt 4 - 6 µm auf.

Die Dicke der Schicht mit der Fähigkeit zur Sauerstoffabsorption beträgt vorzugsweise 3 bis 50 µm, bevorzugt 5 bis 30 µm, besonders bevorzugt 10 bis 25 µm.

Vorzugsweise weist die erfindungsgemäße Mehrschichtfolie wenigstens zwei Schichten, besonders bevorzugt drei Schichten, mit der Fähigkeit zur Sauerstoffabsorption (c) auf.

Jeder dieser Schichten kann dieselbe oder eine unterschiedliche Art der sauerstoffabsorbierenden Komponente aufweisen.

In der erfindungsgemäßen Mehrschichtfolie kann jede Schicht mit der Fähigkeit zur Sauerstoffabsorption die sauerstoffabsorbierende Komponente in derselben Menge oder in einer unterschiedlichen Menge aufweisen.

In einer bevorzugten Ausführung ist der Anteil der sauerstoffabsorbierenden Komponente in den Schichten mit der Fähigkeit zur Sauerstoffabsorption (c) unterschiedlich groß.

Vorzugsweise nimmt der jeweilige Anteil der sauerstoffabsorbierenden Komponente in den Schichten mit der Fähigkeit zur Sauerstoffabsorption (c) von den am weitesten außenliegenden zu den am weitesten innenliegenden Schichten ab, wobei mit den Begriffen außen- bzw. innenliegend die Anordnung der Schichten der Mehrschichtfolie gemeint ist, wenn diese als Verpackungsmaterial verwendet wird und mit innenliegend die dem Füllgut mehr zugewandte Seite des Verpackungsmaterials verstanden wird.

Ein solcher Aufbau mit mehr als einer sauerstoffabsorbierenden Schicht hat den Vorteil, dass die erfindungsgemäß angestrebte minimale Sauerstoffdurchlässigkeit nach der Pasteurisierung bzw. Sterilisation gezielt eingestellt werden kann.

Vorzugsweise ist jede Schicht mit der Fähigkeit zur Sauerstoffabsorption (c) zwischen zwei Schichten basierend auf einem Polyolefin eingebettet.

In einer bevorzugten Ausführung der erfindungsgemäßen Mehrschichtfolie basiert die Siegelschicht (d) auf einem Polyolefin, vorzugsweise einem Polyethylen oder einem α-Olefincopolymer, besonders bevorzugt auf wenigstens einem Polymeren ausgewählt aus der Gruppe umfassend Polypropylene, Copolymerisate aus Ethylen und Propylen, Copolymerisate aus Ethylen und Vinylacetat vorzugsweise mit bis zu 30 mol-% Vinylacetat, Copolymerisate aus Ethylen und Estern der Acrylsäure oder Methacrylsäure, Copolymerisate aus Ethylen und ungesättigten Carbonsäuren, wie Acrylsäure oder Methacrylsäure vorzugsweise mit bis zu 15 mol-% Acrylsäure, oder deren Salze, wie Natrium- oder Magnesium-Salze (lonomere), LDPE, vorzugsweise mit einer Dichte von 0,91 g/cm³ bis 0,935 g/cm³, HDPE, m-PE wie Copolymerisate aus Ethylen und α-Olefinen mit wenigstens 3 C-Atomen, wie Buten, Hexen, Octen, 4-Methyl-1-Penten, ganz besonders bevorzugt auf wenigstens einem Polymeren ausgewählt aus der Gruppe umfassend Copolymerisate aus Ethylen und Propylen, LDPE, HDPE und m-PE.

In einer bevorzugten Ausführung weist die erfindungsgemäße Mehrschichtfolie wenigstens zwei Sauerstoffbarriereschichten auf, ganz besonders bevorzugt basierend auf unterschiedlichen Polymeren, wie z. B. auf einem Polyamid bzw. auf einem Ethylen-Vinylalkohol Copolymer.

In einer bevorzugten Ausführungsform der erfindungsgemäßen Mehrschichtfolie ist jeweils eine innenliegende Polyamidschicht angrenzend an eine Schicht mit der Fähigkeit zur Sauerstoffabsorption (c) oder nur durch eine Polyolefinschicht getrennt angeordnet.

Durch diesen Aufbau gemäß dem eine Schicht mit der Fähigkeit zur Sauerstoffabsorption (c) angrenzend an eine innenliegende Polyamidschicht angeordnet ist, läßt sich vorteilhafterweise der Wert der Sauerstoffdurchlässigkeit der erfindungsgemäßen pasteurisierungsbeständigen bzw. sterilisationsbeständigen Mehrschichtfolie noch genauer auf den angestrebten Wert der Sauerstoffundurchlässigkeit einer entsprechend aufgebauten erfindungsgemäß nicht modifizierten Mehrschichtfolie einstellen, die noch keiner Pasteurisierung bzw. Sterilisation unterzogen worden ist.

Bevorzugt umfaßt die erfindungsgemäße pasteurisierungsbeständige bzw. sterilisationsbeständige Mehrschichtfolie mindestens eine Polyamidschicht (a) als Außenschicht, eine angrenzende Sauerstoffbarriereschicht (b), eine darauffolgende Polyamidschicht, eine darauffolgende Schicht basierend auf einem Polyolefin, wenigstens zwei Schichten mit der Fähigkeit zur Sauerstoffabsorption (c) und eine Siegelschicht (d) als zweite Außenschicht der Mehrschichtfolie.

Grundsätzlich kann die pasteurisierungsbeständige bzw. sterilisationsbeständige Mehrschichtfolie zusätzlich übliche Zusatz- und Hilfsstoffe wie Füllstoffe, Färbungsmittel, antistatische Mittel und Stabilisatoren enthalten. Zur Variation der Gleiteigenschaften der Mehrschichtfolie kann mindestens ein Gleitmittel und/oder Antiblockmittel enthalten sein. Antiblockmittel sollten dabei vorzugsweise in die Folienaußenschichten gegeben werden, Gleitmittel auch in die innenliegende Schichten.

Die erfindungsgemäße Mehrschichtfolie kann bedruckt werden, wobei mindestens eine Schicht der Mehrschichtfolie bedruckt oder durch die Zugabe von Additiven wie organischen oder anorganischen Farbstoffen und Pigmenten eingefärbt werden kann.

Die Herstellung der erfindungsgemäßen Mehrschichtfolie kann nach einem Blas-, Flach-Folien-, Beschichtungs- Coextrusions- oder einem entsprechenden Beschichtungs- oder Kaschier-Verfahren erfolgen, wobei das Blas- bzw. Flach-Folien-Coextrusionsverfahren bevorzugt ist.

Mit der erfindungsgemäßen Mehrschichtfolie gelingt es, eine Mehrschichtfolie für Verpackungen bereitzustellen, die eine Sauerstoffdurchlässigkeit aufweist, die durch ein Sterilisieren bzw. Pasteurisieren höchstens auf die Sauerstoffdurchlässigkeit einer entsprechend aufgebauten erfindungsgemäß nicht modifizierten und nicht pasteurisierten oder nicht sterilisierten Mehrschichtfolie bzw. einer daraus hergestellten Verpackung ansteigt. Außerdem behält die Mehrschichtfolie bzw. die daraus hergestellte Verpackung diese vorteilhafte Eigenschaft auch während längerer Lagerzeit.

Ein weiterer Gegenstand der Erfindung ist daher die Verwendung der erfindungsgemäßen pasteurisierungsbeständigen bzw. sterilisationsbeständigen Mehrschichtfolie zur Herstellung einer pasteurisierungsbeständigen bzw. sterilisationsbeständigen Verpackung, vorzugsweise für Lebensmittel und besonders bevorzugt für verderbliche Lebensmittel, bzw. eine pasteurisierungsbeständige bzw. sterilisationsbeständige Verpackung aus einer erfindungsgemäßen Mehrschichtfolie, vorzugsweise für Lebensmittel oder medizinische Produkte, besonders bevorzugt für verderbliche Lebensmittel.

Diese Verpackungen können aus der Mehrschichtfolien auf allen dem Fachmann bekannten Verpackungsmaschinen hergestellt werden, beispielsweise auf horizontalen oder auf vertikalen, automatisch laufenden Verpackungsmaschinen, auf Tiefziehmaschinen oder auf Siegelbeutelmaschinen.

Die Methode zur Durchführung der Pasteurisierung erfolgt gemäß den in der Anmeldung nachstehend angegebenen Bedingungen.

Die Sterilisation erfolgt gemäß DIN 58946, wie vorstehend ausgeführt.

Die Messung der Sauerstoffdurchlässigkeit erfolgt nach DIN 53380-Teil 3 mit dem Gerät Ox-Tran 2/20 der Firma Mocon Instrument gemäß der nachfolgend angegebenen Bedingungen.

### Beispiele

### Beispiel 1

Durch Coextrusion wurde eine erfindungsgemäße Mehrschichtfolie mit folgenden Aufbau hergestellt:
Eine Polyamidschicht als Außenschicht, eine innenliegende Sauerstoffbarriereschicht, eine innenliegende Polyamidschicht, eine anschließende Polyethylenschicht, eine innenliegende Schicht mit der Fähigkeit zur Sauerstoffabsorption und eine Siegelschicht (PA/EVOH/PA/PE/PE+Absorber/PE), wobei die außenliegende Polyamidschicht auf PA 6 basiert und eine Dicke von 16,5 µm besitzt, die innenliegende Sauerstoffbarriereschicht aus einem Ethylen-Vinylalkohol Copolymer mit 29 mol-% Ethyleneinheiten besteht und eine Dicke von 5 µm besitzt, die innenliegende Polyamidschicht auf PA 6 basiert und eine Dicke von 16,5 µm besitzt, die innenliegende Schicht Polyethylenschicht auf einer Mischung aus 50 Gew-% LDPE und 50 Gew-% LLDPE basiert und eine Dicke von 30 µm besitzt, die innenliegende Schicht mit der Fähigkeit zur Sauerstoffabsorption auf einer Mischung aus 50 Gew-% LDPE und 50 Gew-% LLDPE basiert und 3,6 Gew-%, bezogen auf das Gesamtgewicht der Schicht, Eisen als sauerstoffabsorbierende Komponente enthält und eine Dicke von 20 µm besitzt, die Siegelschicht auf einer Mischung aus 50 Gew-% LDPE und 50 Gew-% LLDPE besteht und eine Dicke von 25 µm besitzt.
Von dieser Mehrschichtfolie wurde die Sauerstoffdurchlässigkeit vor der Pasteurisierung bzw. nach der Pasteurisierung gemessen. Die Pasteurisierung erfolgte durch Erhitzen der Mehrschichtfolie auf 85 °C in einem Wasserbad für 45 Minuten.
Die Messung der Sauerstoffdurchlässigkeit der erfindungsgemäßen Mehrschichtfolie erfolgte über einen Zeitraum von 140 Stunden bei einer Temperatur von 23 °C und 75 % Raumfeuchte nach DIN 53380-Teil 3 mit einem Gerät Ox-Tran 2/20 der Fa. Mocon Instrument.
Die Sauerstoffdurchlässigkeit der erfindungsgemäßen Mehrschichtfolie betrug vor der Pasteurisierung 1.5 cm³/m²•Tag•atm und nach der Pasteurisierung zu Beginn der Messung 0 cm³/m²•Tag•atm und nach 80 Stunden 4.0 cm³/m²•Tag•atm.

Weiterhin wurde dieser Wert der Sauerstoffdurchlässigkeit auch noch nach 140 Stunden, d. h. nach 6 Tagen Lagerung, gemessen.

### Vergleichsbeispiel 1

Durch Coextrusion wurde eine Mehrschichtfolie mit einem Aufbau entsprechend Beispiel 1 hergestellt, die aber in der Polyethylenschicht (c) keine sauerstoffabsorbierende Komponente enthält.
Von dieser Mehrschichtfolie wurde die Sauerstoffdurchlässigkeit vor der Pasteurisierung bzw. nach der Pasteurisierung gemessen. Die Pasteurisierung bzw. die Messung der Sauerstoffdurchlässigkeit erfolgten nach denselben Methoden wie in Beispiel 1 angegeben.
Die Sauerstoffdurchlässigkeit der nicht pasteurisierten Mehrschichtfolie steigt von 3.2 cm³/m²•Tag•atm zur Beginn der Messung auf 4 cm³/m²•Tag•atm nach 80 Stunden Lagerung an. Die Sauerstoffdurchlässigkeit der pasteurisierten Mehrschichtfolie lag unmittelbar nach der Pasteurisierung bei 10.0 cm³/m²•Tag•atm und sank auf 7.0 cm³/m²•Tag•atm nach 80 Stunden Lagerung.

## Patentansprüche

1. Eine pasteurisierungsbeständige bzw. sterilisationsbeständige Mehrschichtfolie umfassend mindestens folgende Schichten
(a) wenigstens eine Polyamidschicht als Außenschicht,
(b) wenigstens eine innenliegende Sauerstoffbarriereschicht,
(c) wenigstens eine innenliegende Schicht mit der Fähigkeit zur Sauerstoffabsorption und
(d) eine Siegelschicht,
**dadurch gekennzeichnet, dass** die Mehrschichtfolie eine Sauerstoffdurchlässigkeit aufweist, die durch die Pasteurisierung bzw. die Sterilisation der Mehrschichtfolie höchstens auf die Sauerstoffdurchlässigkeit einer entsprechend aufgebauten nicht pasteurisierten bzw. nicht sterilisierten Mehrschichtfolie ohne eine sauerstoffabsorbierenden Komponente ansteigt.

2. Mehrschichtfolie gemäß Anspruch 1, **dadurch gekennzeichnet, dass** die Schicht (c) auf einem Polyolefin basiert.

3. Mehrschichtfolie gemäß Anspruch 1 oder 2, **dadurch gekennzeichnet, dass** das Polyolefin ein Polyethylen ist.

4. Mehrschichtfolie gemäß einem der Ansprüche 1 bis 3, **dadurch gekennzeichnet, dass** die Schicht (c) mit der Fähigkeit zur Sauerstoffabsorption 1 bis 25 Gew-%, bevorzugt 1 bis 15 Gew-%, besonders bevorzugt 1 bis 5 Gew-%, bezogen auf das Gesamtgewicht der Schicht (c), wenigstens einer sauerstoffabsorbierenden Komponente enthält.

5. Mehrschichtfolie gemäß einem der Ansprüche 1 bis 4, **dadurch gekennzeichnet, dass** die sauerstoffabsorbierende Komponente ein Metallpulver und/oder wenigstens eine Metallverbindung ist, die reduzierende Eigenschaften aufweist.

6. Mehrschichtfolie gemäß Anspruch 5, **dadurch gekennzeichnet, dass** das Metallpulver metallisches Eisen ist.

7. Mehrschichtfolie gemäß Anspruch 5, **dadurch gekennzeichnet, dass** die Metallverbindung eine Eisenverbindung, die reduzierende Eigenschaften aufweist, vorzugsweise ein Eisenoxid oder ein Eisenhalogenid ist.

8. Mehrschichtfolie gemäß einem der Ansprüche 1 bis 7, **dadurch gekennzeichnet, dass** die sauerstoffabsorbierende Komponente eine mittlere Teilchengröße von 3 - 50 µm, bevorzugt 3 - 10 µm, und besonders bevorzugt 4 - 6 µm, aufweist.

9. Mehrschichtfolie gemäß einem der Ansprüche 1 bis 8, **dadurch gekennzeichnet, dass** die Mehrschichtfolie wenigstens zwei Schichten, vorzugsweise 3 Schichten, mit der Fähigkeit zur Sauerstoffabsorption aufweist.

10. Mehrschichtfolie gemäß einem der Ansprüche 1 bis 9, **dadurch gekennzeichnet, dass** der Anteil der sauerstoffabsorbierenden Komponente in den Schichten mit der Fähigkeit zur Sauerstoffabsorption (c) unterschiedlich groß ist.

11. Mehrschichtfolie gemäß einem der Ansprüche 1 bis 10, **dadurch gekennzeichnet, dass** der jeweilige Anteil der sauerstoffabsorbierenden Komponente in den Schichten mit der Fähigkeit zur Sauerstoffabsorption (c) von der weiter außenliegenden zu den weiter innenliegenden Schichten abnimmt.

12. Mehrschichtfolie gemäß einem der Ansprüche 1 bis 11, **dadurch gekennzeichnet, dass** jede der Schichten mit der Fähigkeit zur Sauerstoffabsorption (c) zwischen zwei Schichten basierend auf einem Polyolefin eingebettet ist.

13. Mehrschichtfolie gemäß einem der Ansprüche 1 bis 12, **dadurch gekennzeichnet, dass** die Sauerstoffbarriereschicht (b) auf einem Ethylen-Vinylalkohol Copolymeren basiert.

14. Mehrschichtfolie gemäß Anspruch 13, **dadurch gekennzeichnet, dass** die Schicht eine Dicke von 3 - 10 µm aufweist.

15. Mehrschichtfolie gemäß einem der Ansprüche 1 bis 14, **dadurch gekennzeichnet, dass** die Polyamidschicht (a) auf einem Polyamid ausgewählt aus der Gruppe umfassend aliphatische Polyamide wie PA 6, PA 4, PA 11, PA 12, PA 66, PA 6.66, PA 6.8, PA 6.9, PA 6.10, PA 6.11, PA 6.12, deren Copolymere, aromatische oder teilaromatische Polyamide basiert.

16. Mehrschichtfolie gemäß einem der Ansprüche 1 bis 15, **dadurch gekennzeichnet, dass** die Mehrschichtfolie noch wenigstens eine weitere, innenliegende Polyamidschicht enthält.

17. Mehrschichtfolie gemäß Anspruch 16, **dadurch gekennzeichnet, dass** die innenliegende Polyamidschicht nanoskalige, anorganische Füllstoffe, vorzugsweise Schichtsilikate, enthält und als weitere Sauerstoffbarriereschicht dient.

18. Mehrschichtfolie gemäß Anspruch 17, **dadurch gekennzeichnet, dass** die nanoskaligen, anorganischen Füllstoffe Phyllosilikate, Oxide, Oxihydrate und/oder Carbonate, bevorzugt Montmorillonite und/oder Glimmer, sind.

19. Mehrschichtfolie gemäß Anspruch 17 oder 18, **dadurch gekennzeichnet, dass** der Anteil der nanoskaligen, anorganischen Füllstoffe 10 - 3000 ppm, vorzugsweise 50 - 2000 ppm, bezogen auf das Polyamid, beträgt.

20. Mehrschichtfolie gemäß einem der Ansprüche 1 bis 19, **dadurch gekennzeichnet, dass** die Mehrschichtfolie wenigstens zwei Sauerstoffbarriereschichten, vorzugsweise basierend auf unterschiedlichen Polymeren, aufweist.

21. Mehrschichtfolie gemäß einem der Ansprüche 1 bis 20, **dadurch gekennzeichnet, dass** jeweils eine innenliegende Polyamidschicht nur durch eine Polyolefinschicht getrennt an eine Schicht mit der Fähigkeit zur Sauerstoffabsorption (c) angrenzt.

22. Mehrschichtfolie gemäß einem der Ansprüche 1 bis 21, **dadurch gekennzeichnet, dass** die Siegelschicht (d) auf einem Polyolefin, bevorzugt einem Polyethylen oder einem Olefincopolymeren basiert.

23. Mehrschichtfolie gemäß einem der Ansprüche 1 bis 22 umfassend mindestens folgenden Schichten
eine Polyamidschicht als Außenschicht (a),
eine angrenzende Sauerstoffbarriereschicht (b),
eine angrenzende Polyamidschicht,
eine angrenzende Schicht basierend auf einem Polyolefin,
wenigstens zwei Schichten mit der Fähigkeit zur Sauerstoffabsorption (c), und eine Siegelschicht (d).

24. Verwendung einer Mehrschichtfolie gemäß einem der Ansprüche 1 bis 23 zur Herstellung einer pasteurisierungsbeständigen bzw. sterilisationsbeständigen Verpackung, vorzugsweise für Lebensmittel, besonders bevorzugt für verderbliche Lebensmittel.

25. Pasteurisierungsbeständige bzw. sterilisationsbeständige Verpackung aus einer Mehrschichtfolie gemäß einem der Ansprüche 1 bis 23, vorzugsweise für Lebensmittel oder medizinische Güter, besonders bevorzugt für verderbliche Lebensmittel.
